# EUROPÄISCHE PATENTANMELDUNG

(11) **EP 1 873 498 A1**
(43) Veröffentlichungstag der Anmeldung: **02.01.2008**
(21) Anmeldenummer: 06405274.9
(22) Anmeldetag: 27.06.2006
(51) Int. Cl.: G01D 11/24, G01B 7/30, B60J 7/12

(54) **Winkelgeber mit Gehäuse**

(71) Anmelder: Contelec SA, 2555 Brügg bei Biel (CH)
(72) Erfinder: Schnorr, Daniel, 2564 Bellmund (CH); Zingg, Roger, 2562 Port (CH)
(74) Vertreter: AMMANN PATENTANWÄLTE AG BERN

(57) **Zusammenfassung**

Der Winkelgeber dient zum Erfassen des Winkels zwischen zwei gegeneinander drehbaren Gelenkteilen (41, 42), welche an einer Achse gehalten sind, und umfasst folgende Komponenten: ein Gehäuse (10) mit einer drehbaren Sensorwelle (11), welche an das erste Gelenkteil (41) ankoppelbar ist, und einen Sensor, welcher im Gehäuse angeordnet ist und welcher mit der Sensorwelle zusammenwirkt zur Erzeugung eines Winkelsignals. Die Achse ist durch das Gehäuse des Winkelgebers gebildet. Dadurch ist ein guter Schutz des Sensors sowie ein flacher Aufbau des Gelenks gewährleistet.

## Beschreibung

Die vorliegende Erfindung bezieht sich auf einen Winkelgeber zum Erfassen des Winkels zwischen zwei gegeneinander drehbaren Gelenkteilen gemäss Oberbegriff des Anspruchs 1.

Derartige Gelenkteile bilden ein Drehgelenk, wie es bei einem zurückklappbaren Verdecks eines Cabriolets verwendet wird. Um das Verdeck mittels eines Antriebs gesteuert bewegen zu können, ist die Lage der Gelenkteile zu erfassen.

Aus der EP 550 952 A1 ist es bekannt, ein Potentiometer als Winkelgeber zu verwenden, mit welchem der Winkel zwischen den einzelnen Gelenkteilen gemessen wird. Der Winkelgeber ist aussen am Drehgelenk angebracht, was zu einem relativ voluminösen und komplizierten Aufbau führt. Im Weiteren besteht bei dieser Anordnung die Gefahr, dass der Winkelgeber beim Bewegen des Verdecks beschädigt wird.

Ausgehend von diesem Stand der Technik liegt eine Aufgabe der vorliegenden Erfindung darin, einen Winkelgeber zu schaffen, der besser geschützt ist und einen flachen Aufbau eines Drehgelenks gewährleistet.

Einen Winkelgeber, der diese Aufgabe löst, ist im Anspruch 1 angegeben. Die weiteren Ansprüche geben bevorzugte Ausführungen an.

Gemäss Anspruch 1 ist der Sensor in einem Gehäuse untergebracht, welches direkt als Achse für die beiden Gelenkteile dient. Der Sensor ist somit vor einer Beschädigung geschützt. Durch die Integration des Sensors in die Achse bleiben die äusseren Abmessungen des Drehgelenks unverändert.

Die Erfindung wird im Folgenden anhand eines bevorzugten Ausführungsbeispiels unter Bezugnahme auf Figuren erläutert.

### Es zeigen

Fig. 1 eine erste Variante eines erfindungsgemässen Winkelgebers in einer teilweise geschnittenen perspektivischen Ansicht;
Fig. 2 eine zweite Variante eines erfindungsgemässen Winkelgebers in einer teilweise geschnittenen perspektivischen Ansicht;
Fig. 3 ein Kopplungselement des erfindungsgemässen Winkelgebers in einer perspektivischen Ansicht;
Fig. 4 eine teilweise geschnittene Seitenansicht eines Drehgelenks mit einem erfindungsgemässen Winkelgeber; und
Fig. 5 eine perspektivische Ansicht des Drehgelenks gemäss Fig. 4, wobei das erste Gelenkteil um einen Winkel gedreht ist.

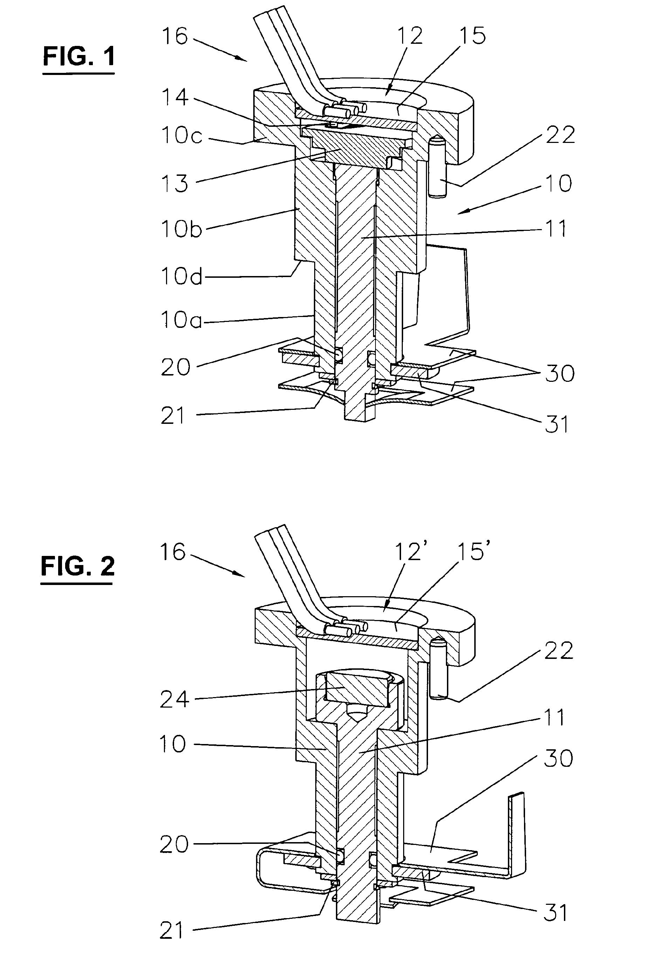

Fig. 1 zeigt ein erstes Ausführungsbeispiel des Winkelgebers. Dieser umfasst ein Gehäuse 10, in welches eine Sensorwelle 11 aufgenommen ist und in welchem sich ein Sensor 12 befindet. Die Sensorwelle 11 ist mittels Gleitlagerungen um die Rotationsachse drehbar gelagert und umfasst endseitig einen Schleiferträger 13 mit einem Schleifer 14.

Sensor 12 und Schleifer 14 bilden ein Potentiometer, welches ein Winkelsignal liefert, das eine Funktion des Winkels ist, um welchen die Sensorwelle 11 in Bezug auf das Gehäuse 10 gedreht ist. Der Sensor 12 umfasst eine Leiterplatte 15, welche endseitig in einer Öffnung im Gehäuse 10 eingelassen ist. Die Leiterplatte 15 ist mit Anschlussleiterbahnen und einer Widerstandsschicht versehen, welche in Kontakt mit dem Schleifer 14 steht. Um den Sensor 12 bzw. die Leiterplatte 15 und mit dieser verbundenen Anschlusskabel 16 am Gehäuse 10 zu fixieren, ist die Öffnung des Gehäuses 10 mit einer aushärtbaren Masse vergossen (in der Fig. 1 nicht dargestellt). Es sind auch andere gängige Fixationsmittel denkbar, um Sensor 12 und Anschlusskabel 16 am Gehäuse 10 zu fixieren.

Die Sensorwelle 11 umfasst eine Nut, in welche ein Dichtmittel in Form eines O-Rings 20 eingelassen ist. Dadurch ist das Innere des Gehäuses 10 und insbesondere der Sensor 12 und der Schleifer 15 gegenüber aussen abgedichtet, sodass der Winkelgeber besonders robust ist.

Das Ende der Sensorwelle 11 ragt aus dem Gehäuse 10 heraus und ist mit einer Sicherungsscheibe 21 versehen, um eine axiale Verschiebung der Sensorwelle 11 zu verhindern. Das Ende der Sensorwelle 11 ist drehfest mit einem Kopplungselement 30 verbunden. Dieses ist zusätzlich mit einer Sicherungsscheibe 31 gesichert, welche am Gehäuse 10 befestigt ist.

Das Gehäuse 10 ist als Hülse aus Metall, z.B. Stahl und im Wesentlichen rotationssymmetrisch ausgebildet. Es weist einen ersten Abschnitt 10a mit einer zylindrischen Aussenfläche, einen zweiten Abschnitt 10b mit einer zylindrischen Aussenfläche sowie einen Kragen 10c auf. Der Durchmesser des ersten Abschnitts 10a ist kleiner als der Durchmesser des zweiten Abschnitts 10b, wobei der Übergang zwischen den beiden Abschnitten 10a und 10b durch eine Stufe 10d gebildet ist.

Der erste 10a Abschnitt bildet eine Lagerstelle für ein erstes Gelenkteil, welches drehbar um die Rotationsachse ist. Die Aussenflächen des ersten Abschnitts 10a dienen dabei als Gleitflächen, auf welchen das erste Gelenkteil gleiten kann.

Der zweite Abschnitt 10b dient als Halterung für ein zweites Gelenkteil, welches drehfest mit dem Gehäuse 10 verbindbar ist. Zur Verdrehsicherung dient ein Verdrehsicherungsstift 22, welcher in einem Loch im Kragen 10c eingelassen ist und nach der Montage in ein Loch im zweiten Gelenkteil greift.

Die Stufe 10d und der Kragen 10c bilden je einen Anschlag für das erste bzw. zweite Gelenkteil.

Anstelle eines kontaktbehafteten Sensors 12 kann auch ein Sensor im Gehäuse untergebracht sein, der eine berührungslose Messung des Winkels erlaubt. Fig. 2 zeigt eine derartige Variante, wobei Teile, die den Teilen gemäss Fig. 1 entsprechen, mit denselben Bezugszeichen versehen sind.

Am Ende der Sensorwelle 11 ist ein Magnet 24 aufgenommen, welcher auf den Sensor 12' wirkt. Dieser umfasst eine Leiterplatte 15', auf welchem sich eine integrierte Schaltung mit einem Hallelement befindet. Die Schaltung ist vorzugsweise als ASIC ("application specific integrated circuit") ausgebildet.

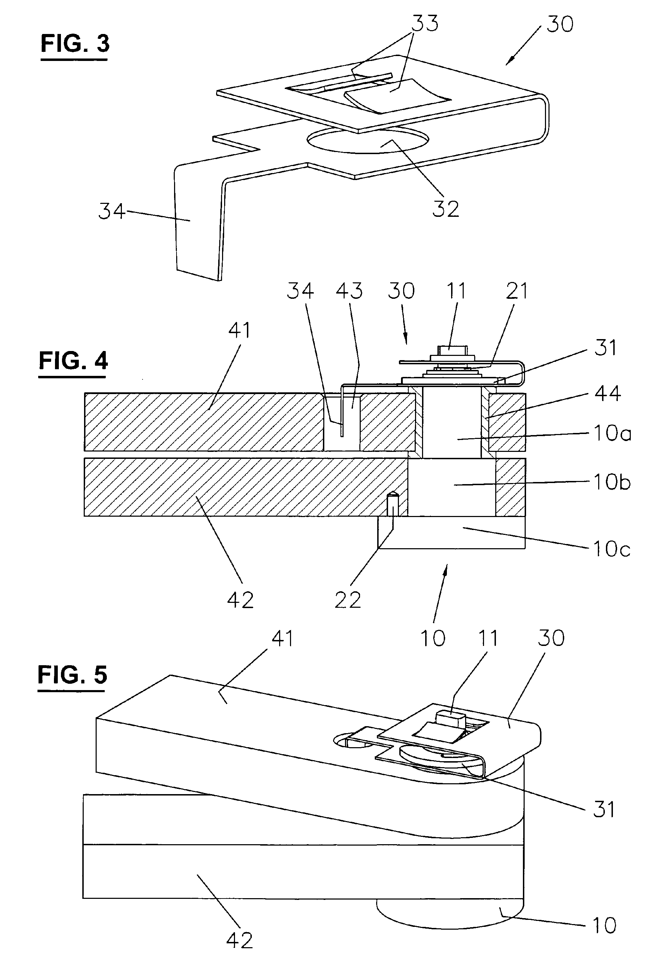

Sensorwelle 11 und Kopplungselement 30 sind in Fig. 2 in einer um 90 Grad gedrehten Stellung gegenüber der Stellung in Fig. 1 dargestellt. Wie insbesondere auch Fig. 3 zeigt, ist das Kopplungselement 30 einstückig ausgebildet, indem es z.B. aus Blech gestanzt und gebogen wird. Das Kopplungselement 30 umfasst einen U-förmig gebogenen Teil mit zwei Schenkeln. Der erste Schenkel ist mit einer Öffnung 32 versehen und wirkt als Unterlagsscheibe für die Sicherungsscheibe 31. Am ersten Schenkel ist ein abgewinkelter Arm 34 angeformt, der als Mitnehmer für das erste Gelenkteil dient. Der zweite Schenkel ist mit zwei elastischen Klemmlaschen 33 versehen, welche zum Festklemmen der Sensorwelle 11 dienen.

Zur Montage des Winkelgebers wird das Gehäuse 10 durch eine Öffnung im zweiten Gelenkteil 42 hindurchgeführt, bis dieses auf dem Kragen 10c aufliegt und der Verdrehsicherungsstift 22 in das Loch im zweiten Gelenkteil 42 greift, vgl. Fig. 4. Das zweite Gelenkteil 42 ist somit drehfest mit dem Gehäuse 10 verbunden. Dieses wird dann durch eine Öffnung im ersten Gelenkteil 41 hindurchgeführt und die Sicherungsscheiben 31 und 21 sowie das Kopplungselement 30 befestigt. Der Mitnehmer 34 taucht dabei in eine Vertiefung 43 im ersten Gelenkteil 41 ein, während das Ende der Sensorwelle 11 durch die Öffnung 32 sowie die beiden Klemmlaschen 33 hindurchgeführt ist. Das erste Gelenkteil 41 ist mit einer Lagerbüchse 44 versehen, welche zusammen mit dem ersten Abschnitt 10a des Gehäuses 10 ein Gleitlager bildet.

Wie auch Fig. 5 zeigt, weist die Sensorwelle 11 ein Ende mit einem rechteckigen Querschnitt auf, sodass es sicher durch die Klemmlaschen 33 festgeklemmt ist.

Das erste Gelenkteil 41 ist mittels des Mitnehmers 34 und der Klemmlaschen 33 drehfest mit der Sensorwelle 11 verbunden. Dreht sich das erste Gelenkteil 41, so wird die Sensorwelle 11 mitgedreht und der Sensor 12, 12' erzeugt ein Winkelsignal, aus welchem der Winkel zwischen den beiden Gelenkteilen 41 und 42 bestimmbar ist.

Der soweit beschriebene Winkelgeber hat u.a. den Vorteil, dass der Aufbau des Drehgelenks kompakt ist. Insbesondere in Richtung der Rotationsachse ist das Drehgelenk trotz der Anwesenheit des Sensors 12, 12' flach ausgebildet. Dies wird dadurch erreicht, dass der Sensor 12, 12' im Gehäuse 10 integriert ist, wobei dieses direkt als Achse für die beiden Gelenkteile 41, 42 dient. Diese Anordnung bietet auch den Vorteil, dass eine zusätzliche Komponente in Form der Achse entfällt und somit die Herstellung des Drehgelenks vereinfacht ist.

Durch die robuste Ausführung des Gehäuses 10 ist der Sensor 12, 12' gut gegen äussere Einflüsse wie Feuchtigkeit, Hitze, etc. geschützt, insbesondere auch dann, wenn Dichtmittel zwischen Sensorwelle 20 und Gehäuse 10 vorgesehen sind.

Der Winkelgeber ist vielseitig anwendbar, z.B. bei Scharnieren oder Drehgelenken.

Aufgrund seiner Kompaktheit und Robustheit ist der Winkelgeber besonders auch bei einem zurückklappbaren Verdeck eines Cabriolets einsetzbar. Ein derartiges Verdeck umfasst mehrere Gestänge, die an den Verbindungsstellen Drehgelenke der in Fig. 5 gezeigten Art bilden, und die durch einen gemeinsamen Antrieb bewegbar sind. Mittels der an den Drehgelenken angebrachten Winkelgebern kann der aktuelle Winkel zwischen den einzelnen Gestängen erfasst und so der Antrieb in geeigneter Weise angesteuert werden. Bei der Herstellung des Verdecks, insbesondere beim Lackieren der Gestänge werden hohe Temperaturen erreicht. Der Winkelgeber ist so ausgebildet, dass er diese Prozesstemperaturen aushalten vermag und somit ohne Weiteres diesem Lackierungsprozess ausgesetzt werden kann.

Aus der vorangehenden Beschreibung sind dem Fachmann zahlreiche Abwandlungen zugänglich, ohne den Schutzbereich der Erfindung zu verlassen, der durch die Ansprüche definiert ist.

So sind z.B. anstelle eines Gleitlagers auch andere Ausführungen zur drehbaren Lagerung des ersten Gelenkteils denkbar. Beispielsweise kann anstelle der Lagerbüchse 44 ein Wälzlager vorgesehen sein.

Weiter ist es denkbar, das Gehäuse 10 so auszubilden, dass zusätzliche Gelenkteile drehfest oder drehbar daran anbringbar sind.

Die Gelenkteile 41, 42 sind in den Figuren als flache Hebel dargestellt. Je nach Anwendungszweck können sie auch eine andere Form haben.

## Patentansprüche

1. Winkelgeber zum Erfassen des Winkels zwischen zwei gegeneinander drehbaren Gelenkteilen (41, 42), welche an einer Achse gehalten sind, mit folgenden Komponenten:
einem Gehäuse (10) mit einer drehbaren Sensorwelle (11), welche an das erste Gelenkteil (41) ankoppelbar ist, und
einem Sensor (12, 12'), welcher im Gehäuse angeordnet ist und welcher mit der Sensorwelle zusammenwirkt zur Erzeugung eines Winkelsignals,
**dadurch gekennzeichnet, dass** die Achse durch das Gehäuse (10) gebildet ist.

2. Winkelgeber nach Anspruch 1, wobei das Gehäuse (10) drehfest mit dem zweiten Gelenkteil (42) verbindbar ist und eine Lagerstelle (10a) zur drehbaren Lagerung des ersten Gelenkteils (41) bildet.

3. Winkelgeber nach Anspruch 2, wobei das Gehäuse (10) zur Bildung der Lagerstelle (10a) Gleitflächen umfasst, entlang welchen das erste Gelenkteil (41) gleiten kann.

4. Winkelgeber nach einem der vorangehenden Ansprüche, wobei der Teil (10a) des Gehäuses (10), an welchem das erste Gelenkteil (41) gehalten ist, eine zylindrische Aussenfläche aufweist.

5. Winkelgeber nach einem der vorangehenden Ansprüche, wobei das Gehäuse (10) als Hülse aus Metall ausgebildet ist.

6. Winkelgeber nach einem der vorangehenden Ansprüche, wobei die Sensorwelle (11) im Gehäuse (10) aufgenommen ist und gegenüber diesem mittels eines Dichtmittels (20) abgedichtet ist.

7. Winkelgeber nach einem der vorangehenden Ansprüche, mit einem Kopplungselement (30), welches drehfest mit der Sensorwelle (11) verbunden ist und welches einen Mitnehmer (34) umfasst, der an das erste Gelenkteil (41) ankoppelbar ist, wobei vorzugsweise das Kopplungselement als einteiliges Blechteil ausgebildet ist.

8. Winkelgeber nach einem der vorangehenden Ansprüche, wobei die Sensorwelle (11) einen Schleifer (14) und/oder einen Magneten (24) trägt, welcher zur Erzeugung des Winkelsignals auf den Sensor (12, 12') wirkt.

9. Zurückklappbares Verdeck für ein Cabriolet, wobei das Verdeck mindestens einen Winkelgeber nach einem der vorangehenden Ansprüche umfasst.

10. Kraftfahrzeug mit mindestens einem Winkelgeber nach einem der Ansprüche 1 - 8 und/oder mit einem Verdeck nach Anspruch 9.
